# EUROPEAN PATENT SPECIFICATION

(11) **EP 0 755 338 B1**
(45) Date of publication and mention of the grant of the patent: **18.10.2000**
(21) Application number: 95916904.6
(22) Date of filing: 13.04.1995
(51) Int. Cl.: B60P 5/00, B65F 3/04, G01G 19/12

(54) **DEVICE FOR EMPTYING AND WEIGHING OF A GARBAGE DISPOSAL CAN**
VORRICHTUNG ZUM WIEGEN UND ENTLEEREN VON ABFALLBEHÄLTERN
DISPOSITIF SERVANT A VIDER ET PESER UNE POUBELLE

(30) Priority: 15.04.1994 SE 9401292
(43) Date of publication of application: 29.01.1997
(73) Proprietor: Hamilton, Raoul, 186 93 Vallentuna (SE)
(72) Inventor: Hamilton, Raoul, 186 93 Vallentuna (SE)
(74) Representative: Fagerlin, Heléne
(86) International application number: SE9500419
(87) International publication number: WO9528298

(56) References cited:
- EP-A1- 0 402 352
- EP-A2- 0 292 866
- WO-A-93/17308
- WO-A1-91/05721
- DE-A- 3 819 169
- US-A- 5 119 894
- US-A- 5 215 155

## Description

The invention concerns a device for emptying and weighing a container, preferably a refuse container, and/or its contents according to the preamble of claim 1.

Such a device for weighing and lifting, e.g. dirt, is disclosed in EP,A2, 0 292 866. The apparatus comprises two parallel pairs of links as the connecting links between two different frame parts. A load measuring device is placed at the bottom of the carrying part.

Further lifting and weighing arrangements are described in EP,A1, 0402352, US,A,5 215 155, DE 3818169 and WO 9317308.

The weighing of household waste is a practice which has already begun in waste disposal management. By separating different sorts of waste products for re-cycling, households will only have to pay for the weight of the domestic waste which is collected by the refuse lorry. When that happens it is necessary to weigh the domestic waste in the refuse container at the same time as the container is being emptied into the refuse lorry.

The object of the invention is to produce a device which enables a refuse container to be emptied, with or without being weighed, without the container needing to be equipped with any special device to enable weighing.

A further object is to provide a device which is so constructed that it should be able to fit all existing models of refuse lorry such as backloaders, sideloaders and frontloaders.

The objects of the invention are achieved by means of a device according to the features of the characterising part of claim 1.

Preferred embodiments of the invention have the features described in the subclaims.

The container is grasped by means of raised gripping irons or teeth that have an intervening space which is adapted to the reinforcing edge which usually extends around the container. The gripping irons grasp the refuse container under its front edge.

According to the invention the frame which the container hangs upon is designed as a weighing frame. The weighing frame can be suspended connected to a loadcell or can only have loadcells, so that the weight of the container can be registered during the operation of emptying the container. The weight of the contents of the container can be registered via a printer, PC or similar by the driver of the refuse lorry. Pneumatic or hydraulic cylinders lift up the weighing bed until it locks against a resilient stop, after which the emptying cycle follows a predetermined movement, according, amongst others, to slots in the guiding plates, which can be varied according to the desired emptying cycle for different types of refuse collection machines.

The lower part of the container is preferably held in place by means of a vacuum suction cup to prevent the container tipping over. The suction cup is automatically switched on and off depending on the containers emptying position. The suction cup preferably engages when the weighing bed locks against the resilient stop. It is important that the suction cup is not activated during the weighing itself as that can influence the results of the weighing. The lower part of the container could also be held mechanically. In this case the container is equipped with a gripping means for this purpose.

The invention is more closely described in the following with reference to the drawings which show preferred embodiments.
Fig. 1 shows in perspective a device according to the invention for emptying and weighing the contents of a container, preferably a refuse container.
Fig. 2 shows a view similar to that in Fig. 1, where various parts have been removed for the sake of clarity.
Fig. 3 shows a lateral view of the device according to the invention in the weighing position.
Fig. 4 shows a partially sectioned lateral view of a resilient stop on the upper part of the device according to the invention.
Fig. 5 shows in perspective the device according to the invention in an emptying position.
Fig. 6 shows a view similiar to that in Fig. 1 of a modified embodiment of the device according to the invention.

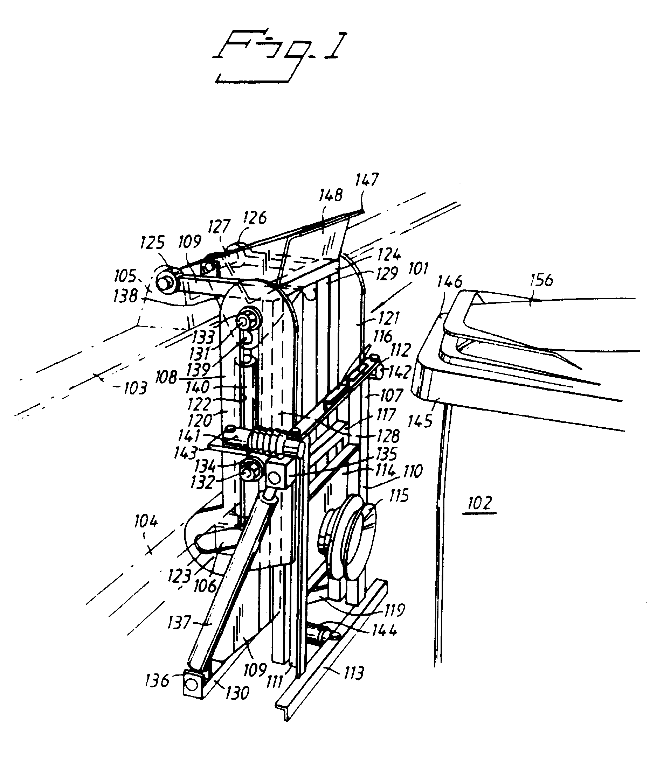

Figs. 1-5 show a first embodiment of a device 101 for emptying and weighing the contents of a container, preferably a refuse container 102. The device 101 is articulately joined with cross members 103,104 on a refuse lorry or other collection vehicle. The device is articulately fastened to projections 105 respectively 106 welded to the cross members 103,104.

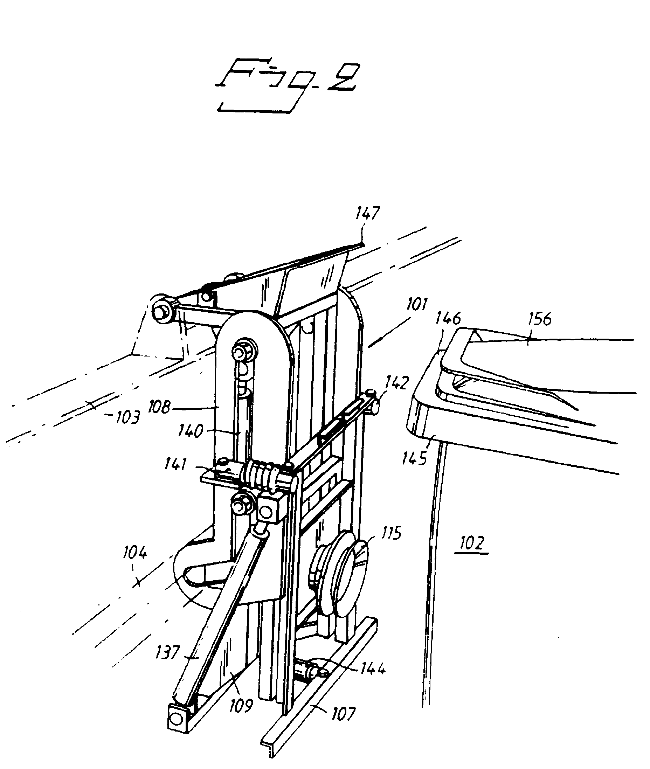

The device 101 comprises three (relative to each other)first, second and third frame sections 107,108 respectively 109, movable (1). All directions and relative positions described below in connection with the description of the device according to the invention are related to the devices lower rest position as shown in Figs. 1 and 2.

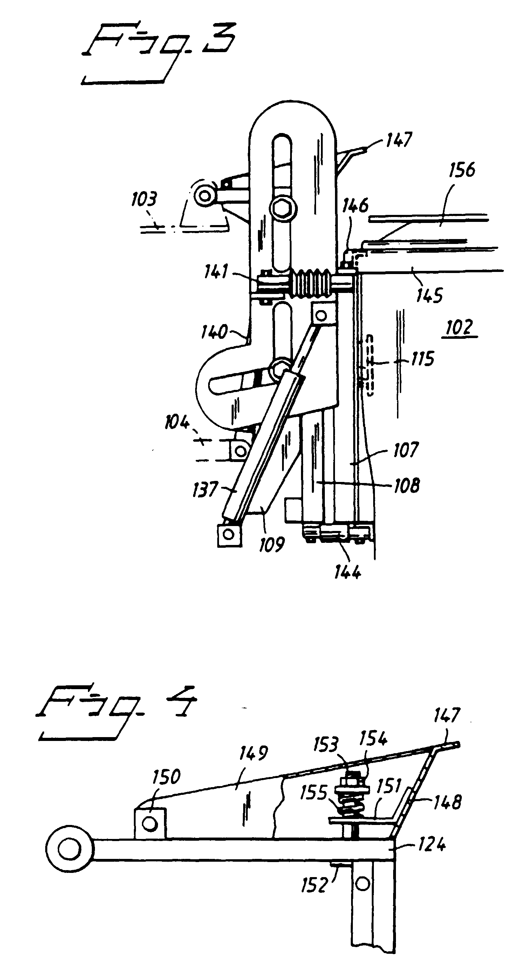

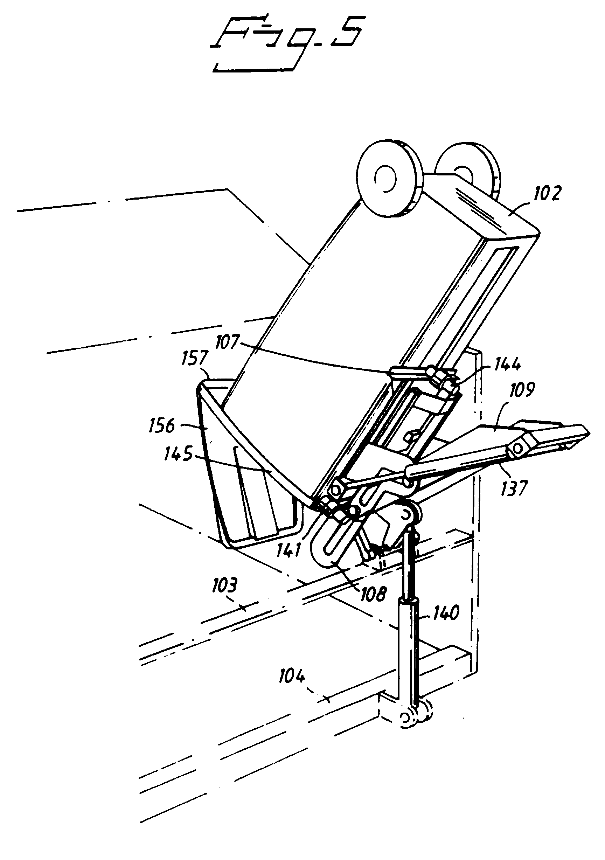

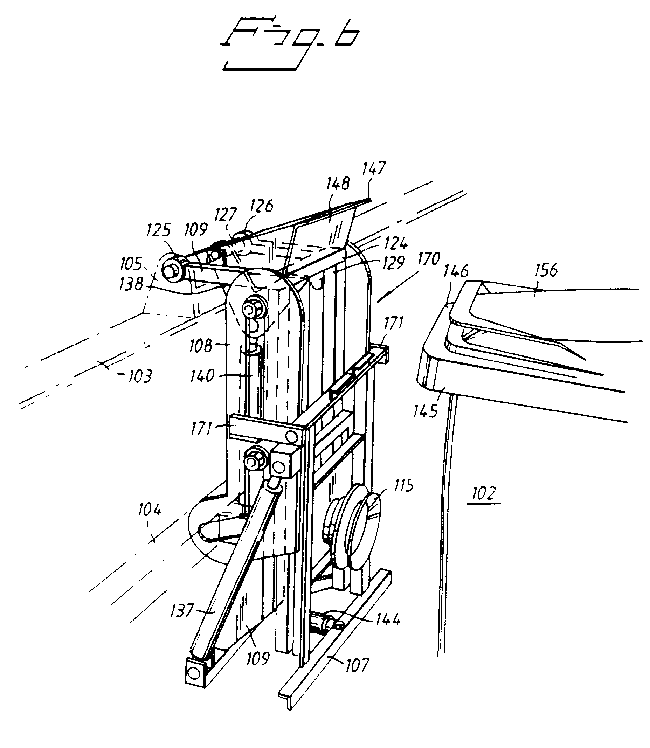

The first frame section 107 comprises two vertical rails 110, 111 which are joined at the top by means of an upper horizontal bar 112 and at the base by means of a lower horizontal 113. Between the vertical rails 110,111 a plate 114 is fastened upon which a suction cup 115 preferably made of rubber is attached. This suction cup can be replaced by a mechanical fastening device for the lower part of the container in the emptying position (Fig. 5). Two teeth 116 are attached to the upper bar 112.

The second frame section 108 comprises a part 117 in the shape of an inverted U, between the lower ends of which a bent elongated part 119 is fastened. Guide plates 120,121 are fastened on each side of the U-shaped part 117. Each guide plate has a straight slot 122 and an L-shaped slot 123 in it.

The third frame section 109 comprises at its upper end a U-shaped part 124 at the ends of which there are bearing races 125,126 which bear on an axle 127, which in turn is mounted in bearings on projection 105 on the upper member 103 on the refuse lorry. Vertical frame parts 128 and 129 are fastened at the top to each other by the shoulders of the U-shaped part 124 (see Fig. 3) and at the base by a member 130 which extends beyond the third frame section 109 in both directions. Upper and lower studs 131 respectively 132 are fastened in holes in frame parts 128,129 and are displacably mounted in guide tracks 122,123 in guide plate 108. Nuts 133,134 and washers lock the outer ends of the studs 131 respectively 132.

A bearing bracket 135 is arranged and fastened on each side of the second frame section's 108 guide plates 120,121. At the outer ends of member 130 bearing mountings 136 are arranged. Between bearing brackets 135 and the bearing mountings 136 a piston and cylinder unit 137 is arranged on each side of device 101. An L-shaped link 138 is mounted in bearings at one of its ends on axle 127 and is attached to U-shaped part 124 by its other end. At its middle 139 one end of a piston and cylinder unit 140 is mounted in bearings. The unit's 140 other end is mounted in bearings in projection 106 on the lower member 104 on the refuse lorry. Both piston and cylinder units 137 and piston and cylinder unit 140 are powered pneumatically but they could also be powered hydraulically.

In the embodiments shown in Figs. 1-5 the first frame section 107 is connected with the second frame section 108 by means of two upper load detectors 141,142, which are attached between the upper horizontal bars 112 on the first frame section 107 and a flange 143 on the guide plates 120,121 on the second frame section 108, and by means of a lower load detector 144 which is attached between the lower horizontal bar 113 on the first frame section 107 and the bent elongated part 119 on the second frame section 108. In this way the weight of the container acting on the first frame part can be measured by means of measuring equipment (not shown).

During use of the device 101 according to the invention the upper bent down edge 145 of the container hook on to the projecting teeth 116 on the first frame section 107, after which piston and cylinder unit 137 is activated and the first and second frame sections are pushed upwards and lift the refuse container 102 from the ground. In an intermediate position, which for example is shown in Fig. 3, the weighing of the refuse container and its contents takes place and is registered. The driver of the refuse lorry can receive the weight of the refuse contained in the refuse container directly on a screen in the cab. It can also be registered directly in a PC installed in the refuse truck, which automatically subtracts the weight of the refuse container and registers the weight for the customer in question. By means of equipment, not shown, such as a bar-code reader (for example), a bar-code on the container can be read and the weight of the rubbish automatically registered without any action by the driver. Specific information about the customer such as name, address and the weight of the empty container (different containers on the market can have different weights), can be obtained from the bar-code. The refuse container 102 is next moved by further activation of the piston and cylinder unit 137 to an upper position where the upper side 146 of the upper edge 145 of the refuse container 102 comes into contact against a bent-over lip 147 on a plate 148 on a stop, which is mounted at its rear end on bearings on axle 127. Finally the bottom parts of frame sections 107,108 are displaced in relation to frame section 109 by means of the lower studs 132 sliding in into the inwardly directed part of the L-shaped track 123. This displacement of frame sections 107,108 is necessary so that in the emptying position the container takes up a suitable angle so that its contents are completely emptied into the refuse lorry.

Fig. 4 shows the stop in partial section. Plate 148 is fastened on both sides to side parts 149, which in turn are mounted in bearings on flanges 150 on the U-shaped part 124 of the third frame section 109. Two smaller angled plates 151 (of which only one is shown in Fig. 4) are welded to the front plate 148. On the underside of the U-shaped part 124, between its two shoulders, an elongated flat bar 152 is mounted, upon which at least two threaded bolts 153 are fastened at a distance from one another and which are led through holes in plates 151. Springs 155 are fitted between the smaller plates 151 and nuts 154 and washers mounted on the upper ends of bolts 153. When the refuse container is lifted, such that the piston and cylinder unit 137 moves the first and second frame sections 107,108 to the upper position, the upper lip 147 on the stop can yield by means of the springs 155, so that plate 148 is no longer in contact with the U-shaped part 124, and the upper lip 147 can yield in a vertical direction so as to not damage the edge 145 of the container, as different containers have edges which vary in material thickness.

In this position, suction cup 115 is first activated, in order to hold the bottom part of the container 102 against the first frame section 107, and subsequently piston and cylinder unit 140, which swing the first and second frame sections 107,108 together with the refuse container 102 to a position which is shown in Fig. 5, wherein the container's lid 156, which is pivotably mounted at 157, is automatically opened by gravity and the contents fall out into the refuse lorry.

Fig. 6 shows a modified embodiment of a device 170 according to the invention in which parts, which correspond to those parts shown in the embodiment in Figs. 1-5, have the same reference number. Device 170 differs from device 102 in that the upper load detectors have been exchanged for links 171. In this way the contents of the container are only measured by the lower load detector 144 which detect the reaction force resulting from gravity acting on the container and its contents at its contact point on the lower horizontal bar 113.

The arrangement of the invention has been described above as being directly mounted on the rear cross member of a refuse lorry. It is also possible within the scope of the following claims to mount the device according to the invention on a separate frame which can be displaced and/or pivoted out of the way to uncover the rear opening of the refuse lorry. The device according to the invention can also be mounted on a side or front loader refuse lorry or on a separate slideable and/or pivotable frame on said types of refuse lorry.

The apparatus according to the invention has been described with reference to the embodiments shown in the drawings. It is of course possible to modify the apparatus according to the invention within the scope of the following claims.

## Claims

1. Apparatus for emptying and weighting a container (102), preferably a refuse container and/or its contents, comprising at least three frame sections (107,108,109), gripping means (116,147) for holding the container on said frame sections and turning means (140) for pivoting at least one of said frame sections together with the container and its contents to an emptying position, **characterized** in that the frame sections (107,108,109) are three in number, that the first frame section (107) is connected with the second frame section (108) by means of at least one load detecting means (141,142,144) for weighing the container (102) and/or its contents, and that the first and second frame sections are pivotably joined to a third frame section (109), whereby the first and second frame sections (107,108) are arranged to be pushed upwards to an upper position, the bottom parts of the frame sections (107,108) arranged to thereafter be displaced in relation to frame section (109) through the action of a piston and cylinder unit (137) in combination with at least one guide track (122,123), and pivot together with the container, to an emptying position, for emptying the contents out of the container through activation of said turning means (140).

2. Apparatus according to claim 1, **characterized** in that two load detecting means (141,142) join the first frame section (107) with the second frame section (108) at the top on both sides thereof, and that the first and second frame sections are joined at the base with each other by means of a coupling, which permits displacement of the first and second frame sections in the vertical direction.

3. Apparatus according to claim 1, **characterized** in that two load detection means (141,142) join the first frame section (107) with the second frame section (108) at the top on both sides thereof, and that the first and second frame sections are joined at the base with each other by means of a further load detecting means (144).

4. Apparatus according to claim 1, **characterized** in that a load detecting means (144) joins the first frame section (107) with the second frame section (108) at the base, and that the first (107) and second (108) frame sections are joined to each other at the top by means of a link (171.

5. Apparatus according to one or more of claims 1-3, **characterized** in that a suction cup (15) is arranged on the first or second frame section (107,108) and is so placed on the frame section (107) that the container (102) in the emptying position is substantially held in contact against the first frame section (107).

6. Apparatus according to claims 1-5, **characterized** in that the at least one guide track (122,123) comprises an L-shaped slot (123).

7. Apparatus according to claims 1-5, **characterized** in that the at least one guide track (122,123) comprises an elongated slot (122).

## Patentansprüche

1. Vorrichtung zum Entleeren und Wiegen eines Behälters (102), vorzugsweise eines Abfallbehälters und/oder seines Inhalts, umfassend zumindest drei Rahmenabschnitte (107, 809), eine Greifeinrichtung (116, 147), um den Behälter auf den Rahmenabschnitten zu halten und eine Umdreheinrichtung (140), um zumindest einen der Rahmenabschnitte zusammen mit dem Behälter und seinem Inhalt in eine Entleerungsposition zu verschwenken, dadurch gekennzeichnet, dass die Rahmenabschnitte (107, 108, 109) drei an der Zahl sind, dass der erste Rahmenabschnitt (107) mit dem zweiten Rahmenabschnitt (108) mit Hilfe zumindest einer Ladungserfassungseinrichtung (141, 142, 144) zum Wiegen des Behälters (102) und/oder seines Inhalts verbunden ist, und die ersten und zweiten Rahmenabschnitte schwenkbar mit einem dritten Rahmenabschnitt (109) verbunden sind, wobei die ersten und zweiten Rahmenabschnitte (107, 108) angeordnet sind, um nach oben in eine obere Position geschoben zu werden, wobei die Bodenteile der Rahmenabschnitte (107, 108) angeordnet sind, um daraufhin in bezug auf den Rahmenabschnitt (109) durch die Wirkung einer Kolben- und Zylindereinheit (137) in Verbindung mit zumindest einer Führungsschiene (122, 123) verschoben zu werden und sich zusammen mit dem Behälter in eine Entleerungsposition zu verschwenken, um den Inhalt aus dem Behälter heraus durch die Betätigung der Umdreheinrichtung (140) zu entleeren.

2. Vorrichtung gemäß Anspruch 1, dadurch gekennzeichnet, dass zwei Beladungserfassungseinrichtungen (141, 142) den ersten Rahmenabschnitt (107) mit dem zweiten Rahmenabschnitt (108) an der Oberseite beider Seiten derselben verbinden und dass die ersten und zweiten Rahmenabschnitte an der Unterseite miteinander mit Hilfe einer Kupplung verbunden sind, die das Verschieben der ersten und zweiten Rahmenabschnitte in der vertikalen Richtung erlaubt.

3. Vorrichtung gemäß Anspruch 1, dadurch gekennzeichnet, dass zwei Beladungserfassungseinrichtungen (141, 142) den ersten Rahmenabschnitt (107) mit dem zweiten Rahmenabschnitt (108) an der Oberseite beider Seiten derselben verbinden, und dass die ersten und zweiten Rahmenabschnitte an der Unterseite miteinander mit Hilfe einer weiteren Beladungserfassungseinrichtung (144) verbunden sind.

4. Vorrichtung gemäß Anspruch 1, dadurch gekennzeichnet, dass eine Beladungserfassungseinrichtung (144) den ersten Rahmenabschnitt (107) mit dem zweiten Rahmenabschnitt (108) an der Unterseite verbindet, und dass die ersten (107) und zweiten (108) Rahmenabschnitte miteinander an der Oberseite mit Hilfe eines Gelenks (171) verbunden sind.

5. Vorrichtung gemäß einem oder mehreren der Ansprüche 1 bis 3, dadurch gekennzeichnet, dass ein Saugnapf (15) auf dem ersten oder zweiten Rahmenabschnitt (107, 108) angeordnet ist und so auf dem Rahmenabschnitt (107) platziert ist, dass der Behälter (102) in der Entleerungsposition im wesentlichen in Kontakt gegen den ersten Rahmenabschnitt (107) gehalten wird.

6. Vorrichtung gemäß Anspruch 1 bis 5, dadurch gekennzeichnet, dass die zumindest eine Führungsschiene (122, 123) einen L-förmigen Schlitz (123) umfasst.

7. Vorrichtung gemäß Anspruch 1 bis 5, dadurch gekennzeichnet, dass die zumindest eine Führungsschiene (122, 123) einen langgestreckten Schlitz (122) umfasst.

## Revendications

1. Appareil pour vider et peser un conteneur (102), de préférence un conteneur de déchets et/ou son contenu, comprenant au moins trois parties de châssis (107, 108, 109), des moyens de préhension (116, 147) pour maintenir le conteneur sur lesdites parties de châssis et des moyens de renversement (140) pour faire basculer au moins l'une desdites parties de châssis avec le conteneur et son contenu vers une position de vidage, caractérisé en ce que les parties de châssis (107, 108, 109) sont au nombre de trois, que la première partie de châssis (107) est reliée à la seconde partie de châssis (108) par l'intermédiaire d'au moins un moyen de détection de charge (141, 142, 144) pour peser le conteneur (102) et/ou son contenu, et que les première et deuxième parties de châssis sont liées à pivotement à une troisième partie de châssis (109), grâce à quoi les première et deuxième parties de châssis (107, 108) sont susceptibles d'être poussées vers le haut vers une position haute, les parties inférieures des parties de châssis (107, 108) étant susceptibles d'être ensuite déplacées en liaison avec la partie de châssis (109) sous l'action conjuguée d'un vérin (137) et d'au moins une glissière de guidage (122, 123) et de basculer ensemble avec le conteneur, vers une position de vidage, pour vider le contenu du conteneur par actionnement desdits moyens de renversement (140).

2. Appareil suivant la revendication 1, caractérisé en ce que deux moyens de détection de charge (141, 142) relient la première partie de châssis (107) à la deuxième partie de châssis (108) au niveau du sommet de chacun des deux côtés de cette dernière, et que les première et deuxième parties de châssis sont reliées l'une à l'autre à la base par des moyens de couplage, qui permettent le déplacement des première et deuxième parties de châssis dans la direction verticale.

3. Appareil suivant la revendication 1, caractérisé en ce que deux moyens de détection de charge (141, 142) relient la première partie de châssis (107) à la deuxième partie de châssis (108) au niveau du sommet de chacun des deux côtés de cette dernière, et que les première et deuxième parties de châssis sont reliées l'une à l'autre à la base par l'intermédiaire d'un moyen de détection de charge (144) supplémentaire.

4. Appareil suivant la revendication 1, caractérisé en ce qu'un moyen de détection de charge (144) relie la première partie de châssis (107) à la deuxième partie de châssis (108) à la base, et que les première (107) et deuxième (108) parties de châssis sont reliées entre elles au sommet par l'intermédiaire d'une liaison (171).

5. Appareil suivant une ou plusieurs des revendications 1 à 3, caractérisé en ce qu'une ventouse (115) est disposée sur la première ou deuxième partie de châssis (107, 108), et est placée sur la partie de châssis (107) de telle manière que le conteneur (102) dans sa position de vidage soit maintenu sensiblement au contact de la première partie de châssis (107).

6. Appareil suivant les revendications 1 à 5, caractérisé en ce que la glissière de guidage (122, 123) comprend une lumière en L (123).

7. Appareil suivant les revendications 1 à 5, caractérisé en ce que le rail de guidage (122, 123) comprend une lumière de forme allongée (122).
